# EUROPÄISCHE PATENTSCHRIFT

(11) **EP 1 768 009 B1**
(45) Veröffentlichungstag und Bekanntmachung des Hinweises auf die Patenterteilung: **02.06.2010**
(21) Anmeldenummer: 06008070.2
(22) Anmeldetag: 19.04.2006
(51) Int. Cl.: G05G 1/08, F16H 59/08

(54) **Drehsteller**
Rotary knob
Actuateur rotatif

(30) Priorität: 21.04.2005 DE 102005018380
(43) Veröffentlichungstag der Anmeldung: 28.03.2007
(73) Patentinhaber: Leopold Kostal GmbH & Co. KG, 58507 Lüdenscheid (DE)
(72) Erfinder: Kossakowski, Thomas, Doncaster DN110EP (GB); Jannasch, Hendrik, Doncaster DN 1 2LT (GB)

(56) Entgegenhaltungen:
- EP-A- 1 229 272
- EP-A- 1 505 612
- WO-A-02/18882

## Beschreibung

Die Erfindung betrifft einen Drehsteller mit einer drehbar gelagerten Stellwelle und einem damit verbundenen, in einer Bedienoberfläche angeordneten Drehknopf, dem eine durch einen Elektromotor angetriebene Stelleinrichtung zugeordnet ist, mittels derer dieser zwischen einer aus der Bedienoberfläche herausragenden Position und einer in der Bedienoberfläche versenkten Position axial verstellbar ist, sowie mit einer eine Rastkurve und zumindest einen in die Rastkurve eingreifenden Rastbolzen umfassenden mechanischen Rasteinrichtung.

Drehsteller werden beispielsweise bei Dateneingabegeräten eingesetzt, bei denen durch Drehen des Drehstellers und gegebenenfalls durch Drücken oder Verschwenken desselben etwa eine Cursorsteuerung in unterschiedlichen Menüebenen durchgeführt werden kann. Beispielsweise kann ein solcher Drehsteller Teil eines sogenannten Joysticks sein. Ein solcher Drehsteller ist bekannt aus der DE 197 12 049 A1. Bei diesem vorbekannten Drehsteller ist getrieblich mit der Stellwelle eine Einrichtung zum Erzeugen einer Haptik gekoppelt. Bei dieser Einrichtung handelt es sich um einen Elektromotor, der entsprechend beaufschlagt ein der Drehbewegung entgegengesetztes Drehmoment auf die Stellwelle ausübt. In Abhängigkeit von der Ansteuerung bzw. Aktivierung des Elektromotors sowohl hinsichtlich der den Elektromotor beaufschlagenden Stromstärke als auch in Abhängigkeit von der aktuellen Drehwinkelstellung der Stellwelle können unterschiedliche Haptiken bereitgestellt werden.

Durch die DE 100 41 935 A1 ist ein Drehsteller bekannt geworden, bei dem mehrere ringförmig angeordnete Rastkurven übereinander angeordnet und zur Erzeugung unterschiedlicher Haptiken wahlweise durch elektromagnetisch betätigbare Spannringe aktivierbar sind. Mit dieser Einrichtung werden die zuvor genannten Nachteile bezüglich des zu schwammigen Gefühls der elektromotorisch erzeugten Haptik überwunden.

Die EP 1 505 612 A2 offenbart einen Drehsteller mit einem Drehknopf, der durch einen Elektromotor in eine Bedienoberfläche hinein und aus dieser wieder heraus axial verschiebbar ist. Dieser Drehsteller verfügt jedoch nicht über eine mechanische Rasteinrichtung.

Durch die EP 1 229 272 A2 ist ein Drehsteller gemäß dem Oberbegriff des Patentanspruchs 1 bekannt geworden. Der Drehsteller, der Teil einer Gangwahleinrichtung für ein Kraftfahrzeug ist, ist komplett durch eine elektromotorisch angetriebene Stelleinrichtung zwischen einer aus der Mittelkonsole des Fahrzeugs herausragenden Position und einer in dieser versenkten Position axial verstellbar, und weist einen Drehknopf auf, der über eine Stellwelle mit einer mechanischen Rasteinrichtung verbunden ist.

Der Drehsteller gemäß der vorliegenden Erfindung ist gegenüber den aus dem beschriebenen Stand der Technik bekannten dahingehend weitergebildet, gleichzeitig mit dem axialen Verstellen des Drehknopfes aus der Gebrauchsstellung in seine versenkte Nichtgebrauchsstellung das Einnehmen einer vorbestimmten Drehstellung sicher zu stellen.

Dies wird erfindungsgemäß dadurch möglich, dass die Rastvertiefungen der Rastkurve abschnittsweise in axialer Richtung sich erstreckende Bahnen ausbilden, die eine Verschiebung der Stellwelle in Richtung ihrer Drehachse ermöglichen, und dass an dem der Bedienoberfläche abgewandten Ende dieser Bahnen eine schräg zu diesen verlaufende, eine Zwangskopplung von Drehbewegung und axialer Verschiebung der Stellwelle bewirkende weitere Bahn in der Rastkurve vorhanden ist.

In einer Weiterbildung der Erfindung ist vorgesehen, dass in dem Gehäuse eine Winkelmesseinrichtung vorhanden ist, mit der die exakte Drehstellung der Stellwelle erfasst werden kann.

Nachfolgend ist die Erfindung anhand eines Ausführungsbeispiels unter Bezugnahme auf die beigefügten Figuren erläutert. Bei diesem Ausführungsbeispiel handelt es sich um eine Anwendung des erfindungsgemäßen Drehstellers als manuelle Eingabeeinrichtung für ein automatisches Getriebe eines Kraftfahrzeugs.

Es zeigen:
- **Fig. 1:**: Eine dreidimensionale Darstellung eines erfindungsgemäßen Drehstellers

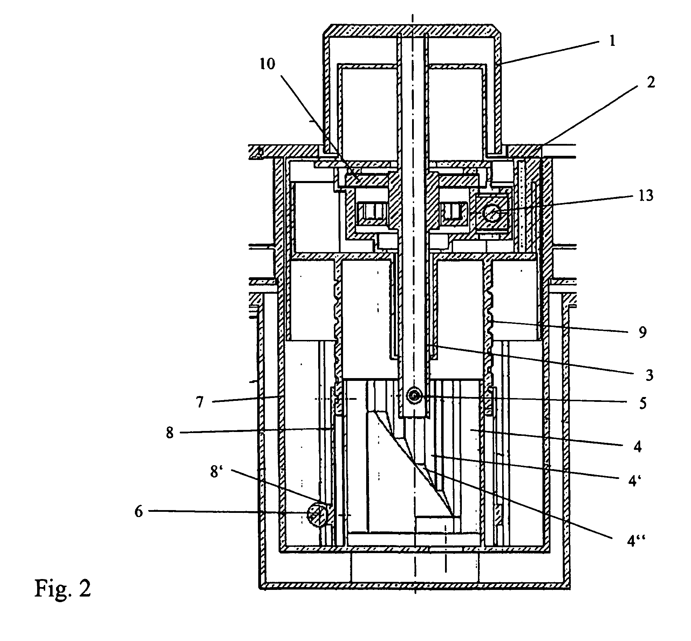

- **Fig. 2:**: Einen Längsschnitt durch den Drehsteller der Figur 1

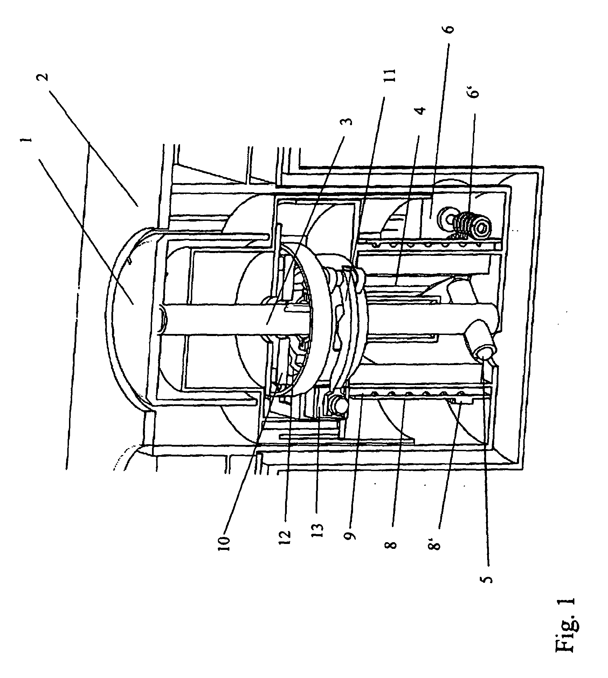

Der in der Zeichnung dargestellte Drehsteller ist bis auf den zur manuellen Bedienung vorgesehenen Drehknopf 1 in einem Gehäuse 7 aufgenommen, das in der Fig. 1 teilweise geöffnet dargestellt ist. Eine in dem Gehäuse 7 drehbar gelagerte Stellwelle 3, durchgreift das Gehäuse 7 an seiner Bedienoberfläche 2 und verbindet den Drehknopf 1 mit einer Haptikerzeugungseinrichtung. Der Drehknopf befindet sich in Fig. 1 in einer Stellung in der das Fahrzeug außer Betrieb genommen werden kann, d.h. in der so genannten P-Stellung, die der Park-Stellung des Getriebes entspricht. Der Drehknopf 1 ist in dieser Stellung mit seiner Oberseite bündig mit der Bedienoberfläche 2. Die mit dem Drehknopf 1 verbundene Haptikerzeugungseinrichtung ist nach Art einer mechanischen Rastung ausgeführt und umfasst im wesentlichen eine zumindest abschnittsweise ringförmige Rastkurve 4 sowie zwei in diese eingreifende federbelastete Rastbolzen 5. Die beiden Rastbolzen 5 sind einander gegenüberliegend in einer mit der Stellwelle 3 verbundenen und in einer senkrecht zur Drehachse derselben angeordneten, hülsenartigen Aufnahme durch eine Druckfeder sich gegenseitig abstützend angeordnet. Die Rastkurve 4 ist auf der Innenseite eines topfförmigen Teils des Gehäuses 7 angeordnet.
Die Rastvertiefungen der Rastkurve 4 bilden abschnittsweise in axialer Richtung sich erstreckende Bahnen 4' aus, die eine Verschiebung der Stellwelle 3 in Richtung ihrer Drehachse ermöglichen. An dem der Bedienoberfläche 2 abgewandten Ende dieser Bahnen 4' ist eine schräg zu diesen verlaufende, eine Zwangskopplung von Drehbewegung und axialer Verschiebung der Stellwelle 3 bewirkende weitere Bahn 4" in der Rastkurve 4 vorhanden.
Der Drehknopf 1 ist mit einer Stelleinrichtung verbunden durch welche er zwischen seiner aus der Bedienoberfläche 2 herausragenden, eine Drehung desselben erlaubenden Gebrauchsstellung und einer in der Bedienoberfläche 2 versenkte eine Drehung desselben verhindernde Nichtgebrauchsstellung verstellbar ist.

Dazu ist in dem topfförmigen Teil des Gehäuses 7 ein zylindrischer Rotor 8 drehbar aufgenommenen, der durch einen Elektromotor antreibbar ist. Ebenfalls in dem topfförmigen Teil des Gehäuses 7 aufgenommen und zwar drehfest und axial verschiebbar zu diesem ist ein Stator 9. Dieser Stator wiederum ist mit der Stellwelle 3 des Drehknopfes 1 drehbeweglich und axial fest verbunden. Der Rotor 8 und der Stator 9 sind über eine gewindeartige Kopplung miteinander in Eingriff gestellt, durch die diese in einer eine Drehbewegung des Rotors 8 in eine axiale Bewegung des Stators 9 umsetzenden Weise miteinander kooperieren.

Der Rotor 8 ist über eine umlaufende Außenverzahnung 8' mittels einer getrieblichen Verbindung mit einem unten im Gehäuse 7 angeordneten Elektromotor 6 in Eingriff gestellt. Die Achse des Elektromotors 6 ist dazu mit einem Schneckenrad 6' versehen, welches ein in die als schrägverzahntes Stirnrad ausgeführte umlaufende Außenverzahnung 8' des Rotors 8 eingreift.

In seiner normalen Gebrauchsstellung ragt der Drehknopf 1 aus der Bedienoberfläche 2 heraus und ist so für den Benutzer greifbar. Eine Drehung des Knopfes 1 in seine verschiedenen Positionen ist gegen die Rastkräfte der Rasteinrichtung und damit unter Erfahrung der damit erzeugten Haptik möglich.

Soll die durch den Drehsteller beeinflussbare elektrische Einrichtung außer Funktion gesetzt werden, so wird zuvor der Drehknopf 1 in seine Nichtgebrauchsstellung verlagert. Dazu wird mittels des Elektromotors 6 über sein Schneckenrad 6' der Rotor 8 in Drehung versetzt. Über die gewindeartige Kopplung zwischen Rotor 8 und Stator 9 wird der Stator 9 durch die Drehbewegung des Rotors 8 in axialer Richtung bewegt, und dadurch der Drehknopf 1 in die Bedienoberfläche 2 hinein zurückgezogen. Eine besonders reibungsarme gewindeartige Kopplung zwischen Rotor 8 und Stator 9, die zudem auch eine geringe Bauhöhe des gesamten Aufbaus ermöglicht, ist durch ein dreigängiges Trapezgewinde an der Außenseite des Stators 9 sowie drei in einem Winkelabstand von jeweils 120° von der Innenseite des Rotors 8 abragende und in dieses Gewinde eingreifende, ebenfalls trapezförmig ausgeführte Stifte realisiert. Bei der axialen Bewegung des Drehknopfes 1 sowie der mit diesem verbundenen Stellwelle 3 treffen die Rastbolzen 5 der Rasteinrichtung auf die am Ende der axial ausgerichteten Bahnen 4' der Rastkurve 4 angeordnete schräg zu diesen verlaufende Bahn 4". Durch diese Bahn 4" wird bei der weiteren axialen Bewegung der Stellwelle 3 auch eine Drehung derselben bewirkt, so dass der Drehknopf 1 nicht nur in die Bedienoberfläche 2 hinein gezogen sondern gleichzeitig auch in seiner Drehstellung verlagert und damit auch bezüglich dieser Drehstellung in eine definierte Ruhe- oder Nichtgebrauchsstellung gebracht wird.

In dieser Nichtgebrauchsstellung des Drehknopfes 1 ist eine Verdrehung desselben verhindert, da in seiner zurückgezogenen axialen Stellung nur eine einzige Drehstellung in der Rastkurve 4 einnehmbar ist. Bei einer erneuten Inbetriebnahme der Einrichtung wird der Elektromotor 6 in der entgegengesetzten Richtung betrieben, wodurch der Drehknopf 1 wieder in seine aus der Bedienoberfläche 2 herausragende Stellung verlagert wird. Seine Drehstellung bleibt dabei in der zuletzt eingenommenen Position, da sich die Rastbolzen 5 lediglich entlang der letzten der axial ausgerichteten Bahnen 4' bewegen. Die anfängliche Drehstellung des Drehknopfes 1 bei einer Inbetriebnahme der Einrichtung entspricht somit stets der in der Nichtgebrauchsstellung eingenommenen.

Um den Drehknopf 1 in seiner Nichtgebrauchsstellung zusätzlich gegen Verdrehung zu sichern oder auch um in anderen Positionen einer Drehsperre zu ermöglichen, sind in einem Bereich oberhalb der Rasteinrichtung Bremsklammern 11 angebracht, die in Kooperation mit einer mit einer den gewünschten Sperrpositionen entsprechenden Kontur versehenen, mit der Stellwelle 3 drehfest verbundenen Sperrscheibe 12 eine Drehung der Stellwelle 3 verhindern können. Um eine solche Drehsperre zu aktivieren werden die Bremsklammern 11 durch eine Magnetspule 13 auf die Stellwelle 3 zu bewegt, und dabei an den Bremsklammern 11 vorhandene Zapfen mit entsprechenden Ausnehmungen in der Kontur der Sperrscheibe 12 in Eingriff gebracht.

Zur Steuerung des Drehstellers ist im Gehäuse 7 eine elektronische Steuereinrichtung vorhanden, die zumindest teilweise auf einer oberhalb der Haptikerzeugungseinrichtung die Stellwelle 3 umgreifend angeordneten Leiterplatte 10 realisiert ist. Ebenfalls auf dieser Leiterplatte 10 sind die feststehenden Abtastelemente einer Winkelmesseinrichtung zur Erfassung der Drehstellung der Stellwelle 3 vorhanden. Diese kooperieren mit entsprechenden Initiatorelementen, die mit der Stellwelle 3 drehfest verbunden sind und sich mit dieser in Bezug auf die feststehende Leiterplatte 10 und die mit dieser verbundenen Abtastelemente drehen. Bei diesen feststehenden Abtastelementen und den diesen zugeordneten Initiatorelementen kann es sich beispielweise um Lichtschranken handeln, die mit Blenden- oder Reflexionselementen kooperieren, oder etwa um Halleffekt- bzw. magnetoresistive Sensoren, die mit entsprechend ausgebildeten Magnetstrukturen kooperieren.

### Bezugszeichenliste

- 1: Drehknopf
- 2: Bedienoberfläche
- 3: Stellwelle
- 4: Rastkurve
- 4': axial verlaufende Bahn
- 4": schräg verlaufende Bahn
- 5: Rastbolzen
- 6: Elektromotor
- 6': Schneckenrad
- 7: Gehäuse
- 8: Rotor
- 8': Außenverzahnung
- 9: Stator
- 10: Leiterplatte
- 11: Bremsklammer
- 12: Sperrscheibe
- 13: Magnetspule

## Patentansprüche

1. Drehsteller mit einer drehbar gelagerten Stellwelle (3) und einem damit verbundenen, in einer Bedienoberfläche (2) angeordneten Drehknopf (1), dem eine durch einen Elektromotor (6) angetriebene Stelleinrichtung zugeordnet ist, mittels derer dieser zwischen einer aus der Bedienoberfläche (2) herausragenden Position und einer in der Bedienoberfläche (2) versenkten Position axial verstellbar ist, sowie mit einer eine Rastkurve (4) und zumindest einen in die Rastkurve (4) eingreifenden Rastbolzen (5) umfassenden mechanischen Rasteinrichtung, **dadurch gekennzeichnet, dass** die Rastvertiefungen der Rastkurve (4) abschnittsweise in axialer Richtung sich erstreckende Bahnen (4') ausbilden, die eine Verschiebung der Stellwelle (3) in Richtung ihrer Drehachse ermöglichen, und dass an dem der Bedienoberfläche (2) abgewandten Ende dieser Bahnen (4') eine schräg zu diesen verlaufende, eine Zwangskopplung von Drehbewegung und axialer Verschiebung der Stellwelle (3) bewirkende weitere Bahn (4") in der Rastkurve (4) vorhanden ist.

2. Drehsteller nach Anspruch 1, **dadurch gekennzeichnet, dass** die Stelleinrichtung einen in einem topfförmigen Teil eines Gehäuses (7) drehbar aufgenommenen, durch den Elektromotor antreibbaren, zylindrischen Rotor (8) sowie einen in dem Gehäuse (7) drehfest und axial verschiebbar aufgenommenen, mit der Stellwelle (3) des Drehknopfes (1) drehbeweglich und axial fest verbundenen Stator (9) umfasst, wobei Rotor (8) und Stator (9) mittels einer eine Drehbewegung des Rotors (8) in eine axiale Bewegung des Stators (9) umsetzenden gewindeartigen Kopplung miteinander kooperieren.

3. Drehsteller nach Anspruch 2, **dadurch gekennzeichnet, dass** der Rotor (8) auf seiner Außenseite eine umlaufende Außenverzahnung (8') aufweist, und über diese mittels eines Zahnradgetriebes mit dem Elektromotor in Eingriff ist.

4. Drehsteller nach einem der Ansprüche 1 bis 3, **dadurch gekennzeichnet, dass** Drehknopf (1) in seiner aus der Bedienoberfläche (2) herausragenden Position in einer eine Drehung desselben erlaubenden Gebrauchsstellung und seiner in der Bedienoberfläche (2) versenkten Position in einer eine Drehung desselben verhindernden Nichtgebrauchsstellung ist

5. Drehsteller nach einem der Ansprüche 1 bis 4, **dadurch gekennzeichnet, dass** zur Steuerung des Drehstellers im Gehäuse (7) eine elektronische Steuereinrichtung vorhanden ist, die auf einer oberhalb der Rastseinrichtung die Stellwelle (3) zumindest teilweise umgreifend angeordneten Leiterplatte (10) realisiert ist.

6. Drehsteller nach einem der Ansprüche 1 bis 5, **dadurch gekennzeichnet, dass** in dem Gehäuse (7) eine Winkelmesseinrichtung zur Erfassung der Drehstellung der Stellwelle (3) vorhanden ist.

7. Drehsteller nach Anspruch 6, **dadurch gekennzeichnet, dass** die Winkelmesseinrichtung auf der Leiterplatte (10) angeordnete, feststehende Abtastelemente und mit der Stellwelle (3) drehfest verbundene und sich mit dieser in Bezug auf die feststehende Leiterplatte (10) drehende Initiatorelemente umfasst.

## Claims

1. Rotary actuator with a pivoted actuating shaft (3) and a rotary knob (1), which is connected to the same and located in a user interface (2), to which an actuating facility driven by an electric motor (6) is allocated by which means the rotary knob (1) is axially adjustable between a position protruding from the user interface (2) and a position recessed in the user interface (2), and having a mechanical detent facility comprising a detent curve (4) and at least one catch pin (5) that engages in the detent curve (4), **characterised in that** the catch recesses of the detent curve (4) form paths (4'), section-wise, that extend in the axial direction and facilitate a displacement of the actuating shaft (3) in the direction of its axis of rotation and that, at the end of these paths (4') pointing away from the user interface (2), a further path (4") is provided in the detent curve (4) running transversely to the former ones and effecting a forced coupling of the rotary movement and an axial displacement of the actuating shaft (3).

2. Rotary actuator in accordance with Claim 1, **characterised in that** the detent facility comprises a cylindrical rotor (8) that can be driven by the electric motor and is rotatably accommodated in a cup-shaped part of a housing (7), as well as a stator (9) which is accommodated in a rotationally moveable and axially displaceable manner in the housing (7) and is connected in a non-rotational and axially fixed manner to the actuating shaft (3) of the rotary knob (1), with the rotor (8) and the stator (9) cooperating with each other by means of a thread-like coupling translating a rotary movement of the rotor (8) into an axial movement of the stator (9).

3. Rotary actuator in accordance with Claim 2, **characterised in that** the rotor (8) shows external toothing (8") on its outer surface and by this means engages with the electric motor by way of a toothed gear drive.

4. Rotary actuator in accordance with any of Claims 1 to 3, **characterised in that** the rotary knob (1) is in its operating condition enabling the same to be turned in its position protruding from the user interface (2), and is in its non-operating condition inhibiting the same to be turned in its position recessed in the user interface (2).

5. Rotary actuator in accordance with any of Claims 1 to 4, **characterised in that** an electronic control device provided in the housing (7) for controlling the rotary actuator is implemented on a printed circuit board (10) located above the detent facility so as to at least partially encompass the actuating shaft (3).

6. Rotary actuator in accordance with any of Claims 1 to 5, **characterised in that** an angle measurement apparatus for detecting the angular position of the actuating shaft (3) is provided in the housing (7).

7. Rotary actuator in accordance with Claim 6, **characterised in that** the angle measurement apparatus comprises fixed scanning members arranged on the printed circuit board (10) and initiator elements that are connected in a torque-proof manner to the actuating shaft (3) and rotate in relation to the static printed circuit board (10).

## Revendications

1. Actuateur rotatif avec un arbre de commande (3) et un bouton tournant (1), y relié, qui est disposé dans un panneau de commande (2), et auquel est associé un dispositif de réglage, entraîné par un moteur électrique (6), au moyen duquel il peut être déplacé, axialement, entre une position en saillie du panneau de commande (2) et une position de rentrée dans ledit tableau de commande (2), ainsi qu'avec un dispositif d'encliquetage mécanique, qui comprend une courbe d'encliquetage (4) et au moins un boulon d'encliquetage (5) qui s'engage dans la courbe d'encliquetage (4), **caractérisé en ce que** les gorges d'encliquetage de la courbe d'encliquetage (4) forment des voies (4'), qui, s'étendant, par sections, dans la direction axiale, permettent un déplacement de l'arbre de commande (3) dans la direction de son axe de rotation, et **en ce que**, à l'extrémité de ces voies (4'), opposée au panneau de commande (2), est prévue, dans la courbe d'encliquetage (4), une autre voie (4"), qui, s'étendant obliquement par rapport aux autres, provoque un couplage forcé du mouvement de rotation et du déplacement axial de l'arbre de commande (3).

2. Actuateur rotatif selon la revendication 1, **caractérisé en ce que** le dispositif de réglage présente un rotor cylindrique, (8), qui, étant logé dans une partie en forme de pot d'un carter (7), peut être entraîné par un moteur électrique, ainsi qu'un stator (9), qui, logé, solidaire en rotation, et pouvant être déplacé axialement dans le carter (7), est relié, mobile en rotation et fixement axialement, à l'arbre de commande (3) du bouton tournant (1), le rotor (8) et le stator (9) coopérant ensemble au moyen d'un couplage en forme de filé, qui convertit un mouvement de rotation du rotor (8) en un mouvement axial du stator (9).

3. Actuateur rotatif selon la revendication 2, **caractérisé en ce que** le rotor (8) présente, sur son côté extérieur, une denture externe (8') périphérique et entre en prise, par l'intermédiaire de celle-ci, avec le moteur électrique, au moyen d'un engrenage.

4. Actuateur rotatif selon l'une des revendications 1 à 3, **caractérisé en ce que** le bouton tournant (1), dans sa position en saillie du panneau de commande (2), est dans une position d'utilisation, qui permet son pivotement, et que dans sa position de rentrée dans le panneau de commande (2), il est dans une position de non utilisation, qui empêche son pivotement.

5. Actuateur rotatif selon l'une des revendications 1 à 4, **caractérisé en ce que**, pour la commande dudit actuateur rotatif, est prévu, dans le carter (7), un dispositif de commande électronique, qui est réalisé sur une plaquette de circuits imprimés (10), qui, disposée au-dessus du dispositif d'arrêt, entoure, au moins partiellement l'arbre de commande (3).

6. Actuateur rotatif selon l'une des revendications 1 à 5, **caractérisé en ce que**, dans le carter (7), est prévu un dispositif de mesure angulaire pour la détection de la position de rotation de l'arbre de commande (3).

7. Actuateur rotatif selon la revendication 6, **caractérisé en ce que** le dispositif de mesure angulaire comprend des éléments palpeurs fixes, disposés sur la plaquette de circuits imprimés (10), et des éléments initiateurs, qui sont reliés solidaires en rotation à l'arbre de commande (3), et qui tournent avec celui-ci par rapport à la plaquette de circuits imprimés (10) fixe.
